# EUROPÄISCHE PATENTSCHRIFT

(11) **EP 2 360 438 B1**
(45) Veröffentlichungstag und Bekanntmachung des Hinweises auf die Patenterteilung: **10.02.2016**
(21) Anmeldenummer: 11154105.8
(22) Anmeldetag: 11.02.2011
(51) Int. Cl.: F24J 3/08

(54) **Fluidturbulator für Erdsonde**
Fluid turbulator for geothermal probe
Turbulateur de fluide pour sonde terrestre

(30) Priorität: 11.02.2010 DE 102010001823
(43) Veröffentlichungstag der Anmeldung: 24.08.2011
(73) Patentinhaber: Dynamic Blue Holding GmbH, 82166 Gräfelfing (DE)
(72) Erfinder: Ledwon, Anton, 53842 Troisdorf (DE)
(74) Vertreter: Patentanwälte Bauer Vorberg Kayser

(56) Entgegenhaltungen:
- EP-A2- 2 034 252
- EP-A2- 2 151 643
- DE-A1- 3 000 157
- JP-A- 2004 340 463

## Beschreibung

Die Erfindung betrifft einen Erdsondenfluidturbolator für eine koaxiale Erdsonde gemäß dem Oberbegriff des Anspruchs 1, welche zum Austausch von Wärme zwischen einem Wärmeübertragungsfluids und dem die Erdsonde umgebenen Erdreich, in welchem die Erdsonde im Betriebszustand angeordnet ist, vorgesehen ist.

Erdsonden können koaxial oder U-förmig aufgebaut sein. U-förmige Erdsonden weisen ein Einströmrohr auf, das in das Erdreich hinabführt und an einem unteren Ende in einem Verbindungsbereich fluidleitend mit einem Ausströmrohr verbunden ist. Das Wärmeübertragungsfluid strömt also das Einströmrohr hinab, geht in dem Verbindungsbereich in das Ausströmrohr über und strömt in diesem wieder hinauf. In koaxialen Erdsonden ist das Einströmrohr ein Außenrohr und das Ausströmrohr ein innerhalb des Außenrohres angeordnetes Innenrohr. Außerhalb des Innenrohres und innerhalb des Außenrohres ist ein Ringbereich, der einen Wärmeübertragungsbereich ausbildet. Die Anordnung des Außenrohres zum Innenrohr ist dabei koaxial. Der Verbindungsbereich ist bei einer koaxialen Erdsonde durch eine Öffnung des Innenrohres gebildet, so dass in dem Außenrohr bzw. im Ringbereich befindliches Wärmeübertragungsfluid hier in das Innenrohr fließen kann. Ein solches System ist in DE 20 2008 002 048 beschrieben.

Beim Durchlaufen der Erdsonde findet eine Wärmeübertragung zwischen dem Wärmeübertragungsfluid und dem Erdreich statt. Die Wärmeübertragung erfolgt im Wesentlichen durch Konvektion. Ob Wärme abgegeben oder aufgenommen wird hängt davon ab, ob die Erdsonde für einen Kälteprozess oder einem Wärmeprozess verwendet wird. Dazu werden gattungsgemäße Erdsonden bis zu 100 m tief im Erdreich angeordnet, in Einzelfällen werden auch größere Tiefen realisiert.

Üblicherweise werden mehrere Erdsonden in einem Erdsondenwärmekreislauf gemeinsam verwendet. Ein solcher Erdsondenwärmekreislauf weist meist eine Pumpe und einen Wärmetauscher auf. Mittels der Pumpe wird Wärmeübertragungsfluid zur Zirkulation innerhalb des Erdsondenwärmekreislaufes gebracht. Die Erdsonden können dabei parallel oder in Reihe oder in Kombinationen daraus geschaltet sein. Im Wärmetauscher wird die gewonnene Temperaturdifferenz zwischen dem zu- und dem abgeleiteten Wärmeübertragungsfluid an einen zweiten Fluidkreislauf übertragen.

Der Temperaturunterschied zwischen dem in die Erdsonde eingeleiteten und abgeleiteten Wärmeübertragungsfluid wird im Folgenden als Temperaturgradient bezeichnet. Dem Erdreich wird ein Wärmestrom oder eine Wärmeleistung entnommen.

Bei Erdsonden von weniger als 100 m Länge bzw. Tiefe beträgt der Temperaturunterschied zwischen dem eingeleiteten Wärmeübertragungsfluid und dem abgeleiteten Wärmeübertragungsfluid in der Regel wenige Grad. Üblich sind Einleitwerte zwischen -2 °C und 1 °C und Ausleitwerte zwischen 2 °C und 5 °C. Die Temperaturdifferenz ist verhältnismäßig gering und das aus den Erdsonden austretende Wärmeübertragungsfluid noch nicht zum Heizen von z.B. Wohnräumen geeignet. Die Wärmeleistung kann jedoch mit Hilfen einer Wärmepumpe nutzbar gemacht werden.

Üblicherweise kommen in einem Erdsondenwärmekreislauf mehrere Erdsonden zum Einsatz, da der nutzbare Temperaturunterschied einer Erdsonde in der Regel nicht ausreicht, um ein Wärmemittel in einem zweiten Fluidkreislauf in der Wärmepume zu verdampfen. Insbesondere bei Erdsonden mit einer Länge von unter 70 m ist der erzielbare Temperaturgradient häufig unzureichend. Weiterhin ist in einigen Regionen die zulässige Bohrtiefe begrenzt, um beispielsweise das Grundwasser zu schützen.

Beispielsweise ist aus der DE 30 00 157 A1, der DE 20 2008 002 048, der EP 2 151 643 A2 aus der JP 2004/340/463 bekannt, dass die Wärmeübertragung verbessert werden kann, indem das Wärmeübertragungsfluid beim Durchströmen der Erdsonde in eine schraubenförmige Drehbewegung versetzt wird. Hierzu können helixförmige Strömungskörper innerhalb der Erdsonde vorgesehen sein, die das ansonsten laminar einströmende Wärmeübertragungsfluid in spiralförmiger Richtung umleiten. Grundsätzlich führt diese Maßnahme bereits zu einer Verbesserung der Wärmeübertragung, allerdings ist gerade bei Erdsonden von weniger als 100 m, aber auch in Regionen, in denen die nutzbare Erdwärme eher gering ist, die Wärmeausbeute noch unzureichend.

Aus JP 2004/3401463 ist einen Erdsondenfluidturbulator gemäß dem Oberbegriff des Anspruchs 1.

Hier setzt nun die Erfindung ein. Sie hat es sich zur Aufgabe gemacht, den Wirkungsgrad von koaxialen Erdsonden und somit die Effizienz von koaxialen Erdsondenwärmekreisläufen zu verbessern. Weiterhin soll die Erfindung den effektiven Gebrauch von Erdsonden in Regionen ermöglichen, in denen Gesetze die zulässige Bohrtiefe begrenzen.

Erfindungsgemäß wird die Aufgabe durch einen Erdsondenfluidturbulator für eine koaxiale Erdsonde mit den Merkmalen des Anspruchs 1 gelöst.

Ein erfindungsgemäß ausgestalteter Erdsondenfluidturbolator ist in einer koaxialen Erdsonde in einem Innenbereich eines Außenrohrs angeordnet und ist gekennzeichnet durch mindestens eine Teilringscheibe, die in einer Ebene liegt, die in einem Winkel zu einer Orthogonalebene einer Längsachse der Erdsonde angeordnet ist, aufweisend einen Mittelpunkt, der etwa auf der Längsachse liegt, einen Innenrand, der zur Befestigung der Teilringscheibe an einem Innenrohr dient und einen Außendurchmesser, der kleiner gleich einem Innendurchmesser des Außenrohrs der Erdsonde ist. Der Mittelpunkt und der Außendurchmesser der Teilringscheibe sind definiert als Mittelpunkt und Außendurchmesser einer geschlossenen Ringscheibe, aus welcher die Teilringscheibe durch Ausschneiden eines Sektors entstehen würde.

Durch das Vorsehen eines Erdsondenfluidturbolators kann die notwendige Länge einer Erdsonde, die erforderlich ist, damit die Erdsonde einen ausreichend großen Wirkungsgrad erreicht, reduziert werden und die Erdsonde kann auch in Regionen eingesetzt werden, in denen die Bohrtiefe geologisch oder gesetzlich begrenzt ist. Der Wirkungsgrad wird durch Verwirbelung des abseits des Erdsondenfluidturbolators annähernd laminar strömenden Wärmeübertragungsfluids erreicht.

Als Wärmeübertragungsfluid wird üblicherweise Wasser verwendet. Da insbesondere in den kalten Wintermonaten auch Temperaturen unterhalb des Nullpunktes auftreten können, wird üblicherweise ein Frostschutz zugesetzt. Bedingt u.a. durch die Anomalie des Wassers ändern sich seine Stoffeigenschaften mit der Temperatur. So ist z.B. die Dichte von Wasser bei 4°C über Null am höchsten. Die Änderung der Stoffeigenschaften des Wassers führt in Erdsonden, in denen kein Erdsondenfluidturbolator angeordnet ist, dazu, dass sich eine annähernd laminare Strömung mit ungleich temperierten Schichten ausbildet. Die ungleich temperierten Schichten verlaufen parallel zu einer Außenrohraußenfläche, wobei in der Nähe der Außenrohrinnenfläche wärmere Schichten vorliegen, welche als Isolatoren der inneren Schichten wirken. Diese inneren Schichten nehmen daher kaum Wärme auf. Durch das Verwirbeln des Wärmeübertragungsfluids wird diese Schichtenbildung aufgehoben und dadurch ein höherer Temparaturgradient erzielt.

Der durch die turbulente Strömung erhöhte Flußwiderstand ist nicht gravierend. Um beispielsweise drei hintereinander geschaltete Erdsonden mit 10 bis 14 Kubikmeter Wasser die Stunde zu durchfluten, reicht ein Druckunterschied von 0,1 bar bis 0,3 bar, so dass eine Pumpe lediglich 100 W bis 300 W an Leistung aufnehmen muss, um den Druckunterschied bereitzustellen.

Eine Teilringscheibe sorgt für unterschiedliche Strömungsrichtungen und ein dadurch verursachtes Verwirbeln des Wärmeübertragungsfluids. Oberhalb des Erdsondenfluidturbolators strömt das Wärmeübertragungsfluid nahezu laminar durch das Außenrohr. Beim Auftreffen auf eine Teilringscheibe erfährt das Wärmeübertragungsfluid, durch die Neigung der Teilringscheibe bezüglich der Orthogonalebene, eine Richtungsänderung und strömt alsdann entlang der Teilringscheibe schräg rotatorisch durch das Außenrohr. Falls der Außendurchmesser der Teilringscheibe kleiner als der Innendurchmesser des Außenrohrs ist, wird der Fluidstrom in zwei Teilströme aufgeteilt: der bereits beschriebene, schrägrotatorische und ein axialer zwischen einer Außenrohrinnenfläche und der Teilringscheibe. Die Aufteilung bewirkt zusätzliches Verwirbeln des Wärmeübertragungsfluids.

Erfindungsgemäß werden mindestens zwei Teilringscheiben entlang der Längsachse benachbart zueinander angeordnet und weisen bezüglich der Orthogonalebene Winkelwerte mit unterschiedlichen Vorzeichen auf. Eine solche Anordnung ähnelt einer Helix, wenn die Winkelwerte in etwa gleiche Beträge aufweisen und die Teilringscheiben einander im Wesentlichen diametral gegenüberliegend, aber entlang der Längsachse versetzt zueinander angeordnet sind. Durch diese Geometrie wird die rotatorische Strömung gefördert.

Zusätzlich können die Teilringscheiben eine oder mehrere Aussparungen aufweisen, durch die ein weiterer Teilstrom erreicht wird. Dieser spaltet sich von der schräg rotatorischen Strömung ab und strömt durch die Aussparungen, also in etwa parallel zur Längsachse, hindurch. Die Form der Aussparungen ist dabei im Wesentlichen frei wählbar. Es eignen sich jedoch runde, elliptische, nierenförmige oder ringsektorische Aussparungen.

Vorzugsweise umschließen zwei benachbarte Teilringscheiben das Innenrohr gemeinsam um weniger als 360° und drei benachbarte Teilringscheiben das Innenrohr gemeinsam um mehr als 360°. Durch eine solche geometrische Anordnung soll eine zusätzliche Strömungsrichtung erreicht werden: die rotatorischen Strömungsrichtung soll sich dadurch zusätzlich aufteilen und einerseits rotatorisch bleiben, und andererseits axial zwischen den Teilringscheiben verlaufen. Ein zusätzliches Vermischen wird dadurch erreicht.

Vorzugsweise bilden mindestens drei entlang der Längsachse zueinander angeordnete Teilringscheiben einen Teilscheibenturbulator. In einer besonders vorteilhaften Gestaltung weist dieser mindestens fünf Teilringscheiben auf. Davon weisen vorteilhafterweise mindestens drei Teilringscheiben einen Mittelpunktwinkel von etwa 180° auf und erweisen sich so als halbe Ringscheiben. Die restlichen Teilringscheiben weisen vorteilhafterweise einen Mittelpunktwinkel von etwa 160° bis 170° auf. Sie können also aus den Teilringscheiben mit Mittelpunktwinkel von etwa 180° dadurch hergestellt werden, dass von diesen Teilringscheiben Ringscheibensektoren von etwa 10° bis 30° an einem ihrer Enden entfernt werden.

Ein Verfahren zum Herstellen einer Teilringscheibe ist dadurch gekennzeichnet, dass eine Platte, vorzugsweise aus thermoplastischem Kunststoff, die mittig ein rundes Loch aufweist, etwa in zwei gleiche Hälften getrennt wird und von welchen Hälften gegebenenfalls endseitig Ringsektoren abgetrennt werden.

Vorzugsweise werden mindestens zwei Teilscheibenturbolatoren verwendet, deren jeweils oberste Teilringscheiben in Ebenen angeordnet sind, die bezüglich der Orthogonalebene in etwa gleiche Winkelwerte, aber mit unterschiedlichen Vorzeichen aufweisen. Dadurch wird erreicht, dass die rotatorische Strömung mindestens einmal im Uhrzeigersinn und mindestens einmal gegen den Uhrzeigersinn verläuft.

Vorzugsweise beinhaltet der Erdsondenturbolator zusätzlich mindestens eine Ringscheibe mit einer Ringscheibenfläche, die sich vorzugsweise parallel zur Orthogonalebene erstreckt und mindestens eine Öffnung in der Ringscheibenfläche aufweist. Die Ringscheibe ist ans Innenrohr befestigt und umgibt dieses, wodurch eine Ringfläche zwischen dem Innenrohr und dem Außenrohr bis auf die Öffnungen der Ringscheibe weitestgehend geschlossen ist. Die Ringscheibe weist also einen Mittelpunkt auf, der etwa auf der Längsachse liegt, einen Innendurchmesser, der gleich einem Außendurchmesser des Innenrohrs ist und einen Außendurchmesser der kleiner gleich dem Innendurchmesser des Außenrohrs ist. Bei einer besonders vorteilhaften Gestaltung dieser Ringscheibe sind ihr Außendurchmesser und der Innendurchmesser des Außenrohrs gleich und stützt dieses. Die Ringscheibe erhöht somit die Stabilität der Erdsonde und schränkt die axiale Strömung entlang des Außenrohrs ein. Die Form und Anzahl der Öffnungen ist dabei im Wesentlichen frei wählbar. Es eignen sich jedoch drei oder vier runde oder nierenförmige Öffnungen.

Vorzugsweise bilden zwei Ringscheiben, die einen Abstand a entlang der Längsachse aufweisen und deren Öffnungen um einen Ringscheibenwinkel um die Längsachse verdreht zueinander angeordnet sind, ein Ringscheibenpaar. Dieser Ringscheibenwinkel sollte vorteilhafterweise so gewählt werden, dass in einer Draufsicht die Öffnungen der unteren Ringscheibe von der Ringscheibenfläche der oberen Ringscheibe zu mindestens teilweise verdeckt sind. Eine solche Anordnung bewirkt, dass das Wärmeübertragungsfluid keine rein translatorische Flußrichtugn zwischen den beiden Ringscheiben, sondern auch rotatorisch strömen muss. Dies fördert den Vermischungsprozess zusätzlich.

Vorzugsweise weist eine Erdsonde auf Längenabschnitten von etwa 20m bis etwa 25m mindestens zehn Teilscheibenturbolatoren und mindestens zwei Ringscheibenpaare auf, so angeordnet, dass oberhalb, zwischen und unterhalb der Ringscheibenpaare Teilscheibenturbolatoren vorgesehen sind. Dadurch wird auf diesen Längenabschnitten ein gemeinsames Verwirbeln und Vermischen des Wärmeübertragungsfluids erreicht.

Das Verwirbeln wird in erster Linie durch die Teilscheibenturbolatoren erreicht, in denen sich das Wärmeübertragungsfluid mehrfach in die drei oben beschriebenen Teilströme aufteilt und anschließend wieder vermengt. Diese Prozesse bewirken hauptsächlich ein Verwirbeln des Wärmeübertragungsfluids, welches zusätzlich durch Rotationsrichtungsänderungen zweier entlang der Längsachse zueinander benachbart angeordneter Teilringscheiben verstärkt wird. Dieser Verwirbelungsprozess wird durch Vermischungsprozesse mehrerer Ringscheibenpaare unterstützt.

Vorteilhafte Ausgestaltungen der Erfindung sind jeweils Gegenstand der abhängigen Ansprüche. Es wird darauf hingewiesen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Weitere Vorteile und Merkmale der Erfindung werden in der nun folgenden Figurenbeschreibung beschrieben. In dieser zeigen:
- Fig. 1:: eine schematische Darstellung einer Erdsonde mit einem Anschlussdeckel, einem Innenrohr und einem Außenrohr, wobei um das Innenrohr Mittel zur Verwirbelung des Wärmeübertragungsfluids angeordnet sind,
- Fig. 2:: eine schematische Darstellung eines Erdsondenwärmekreislaufes mit mehreren Erdsonden, die in Reihe geschaltet sind,
- Fig. 3: die Darstellung eines Erdsondenwärmekreislaufes aus Figur 2 in einer Seitenansicht mit in Erdreich angeordneten Erdsonden, die über Leitungen mit einem Wärmetauscher und einer Pumpe verbunden sind, wobei die Erdsonden in Reihe geschaltet sind,
- Fig. 4: die schematische Darstellung einer beispielhaften Teilringscheibe,
- Fig. 5: die schematische Darstellung eines Teilscheibenturbolators montiert in einer koaxialen Erdsonde und die dadurch verursachten Flussrichtungen des Wärmeübertragungsfluids,
- Fig. 6: die schematische Darstellung einer Ringscheibe mit Öffnungen, und
- Fig. 7: die schematische Darstellung eines Ringscheibenpaars.

Bei der folgenden Beschreibung, sowohl des Teilscheibenturbolators, als auch des gesamten Erdsondenfluidturbolators, wird davon ausgegangen, dass die Erdsonde in vertikaler Richtung montiert wird. Bei schräger Montage der Erdsonde können sich die Lagen der einzelnen Komponenten zueinander ändern.

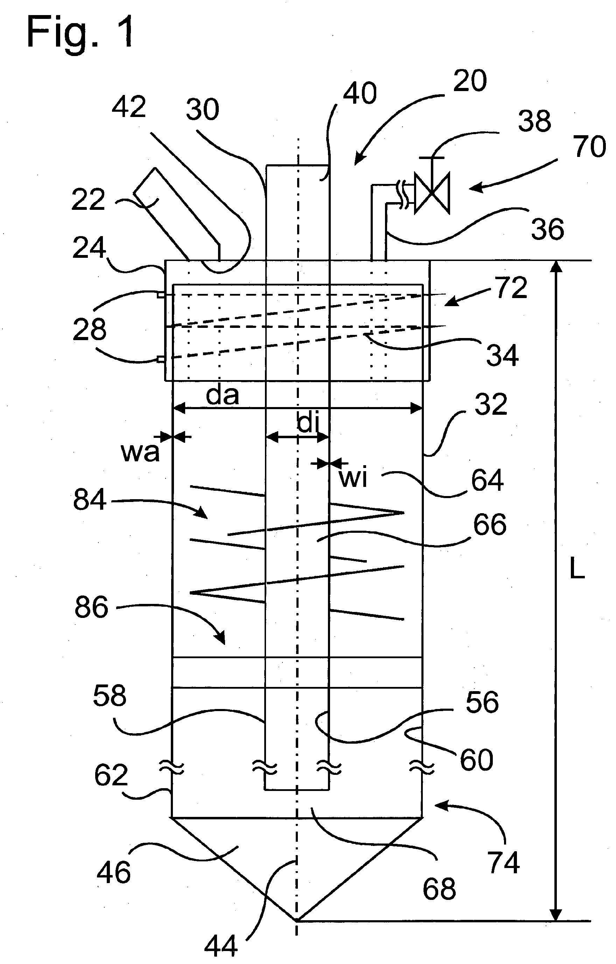

Figur 1 zeigt eine schematische Darstellung einer Erdsonde 20. Über einen Zulauf 22 wird Wärmeübertragungsfluid in ein Außenrohr 32 geleitet. Das Außenrohr 32 ist ein zylindrisches Bauteil mit dem inneren Durchmesser da, gemessen an einer Außenrohrinnenfläche 60. Außen weist das Außenrohr 32 eine Außenrohraußenfläche 62 auf, die zum Erdreich 54 weist. Konzentrisch zum Außenrohr 32 ist innerhalb desselben ein Innenrohr 30 angeordnet. Es ist im Wesentlichen zylindrisch und weist an seiner nach innen weisenden Fläche eine Innenrohrinnenfläche 56 und an seiner nach außen weisenden Fläche eine Innenrohraußenfläche 58 auf. Das Wärmeübertragungsfluid strömt innerhalb eines Ringraumes 64 zwischen Innenrohr 30 und Außenrohr 32 die Erdsonde 20 hinab. Der Ringraum 64 ist horizontal durch die Außenrohrinnenfläche 60 und die Innenrohraußenfläche 58 und vertikal durch einen Verbindungsbereich 68 und das obere Ende 72 der Erdsonde 20 begrenzt. Im Bereich des oberen Endes 72 geht ein Zulauf 22 fluidleitend in den Ringraum 64 über, in dem Verbindungsbereich 68 geht der Ringraum 64 fluidleitend in einen Innenrohrinnenraum 66 über. Der Innenrohrinnenraum 66 ist horizontal durch die Innenrohrinnenfläche 56 und vertikal durch den Verbindungsbereich 68 und den Ablauf 40 begrenzt, in den der Innenrohrraum 66 fluidleitend mündet.

Am oberen Ende 72 ist an dem Außenrohr 32 ein Anschlussdeckel 24 angeordnet. Darin ist der Zulauf 22 fluidleitend mit dem Ringraum 64 und der Ablauf 40 fluidleitend mit dem Innenrohrinnenraum 66 verbunden. Der Anschlussdecke 24 bildet die Schnittstelle zwischen dem Teil der Erdsonde 20, der sich im Erdreich 54 befindet und dem Teil, der von außen zugänglich ist. Vorteilhafterweise weisen sowohl der Zulauf 22 als auch der Ablauf 40 Mittel zur Befestigung von Leitungen auf. In einer sehr einfachen Ausgestaltung ist der Anschlussdeckel 24 auf das Außenrohr 32 gesteckt und abgedichtet. Der gezeigte Anschlussdeckel 23 weist eine Heizwendel 34 auf, die aus einem elektrischen Leiter gebildet wird. Über Anschlußkontakte 28 kann ein Strom durch die Heizwendel 34 geleitet werden, um die Heizwendel 34 zu erhitzen, wodurch der Anschlussdeckel 24 mit dem Außenrohr 32 verschweißt werden kann.

Die Erdsonde 20 weist eine Länge L auf, die entsprechend der erwünschten Tiefe variiert, beispielsweise zwischen 15m und 25 m. Das Wärmeübertragungsfluid nimmt während des Durchströmens des Ringraumes 64 eine Wärmeleistung aus dem Erdreich 54 auf. Das Außenrohr 32 ist dazu vorteilhafterweise aus einem Material gefertigt, welches eine verhältnismäßig hohen Wärmeübertragungskoeffizienten aufweist. Beispielsweise kann Highdensity-Polyethylen, kurz PE-HD verwendet werden. Das Wärmeübertragungsfluid steigt anschließend mit einer höheren Temperatur innerhalb des Innenrohres 30 wieder empor.

In einem unteren Ende 74 der Erdsonde 20 ist ein Sondenfuß 46 angeordnet, der konisch spitz zuläuft. Dieser Sondenfuß 46 erleichtert das Eindringen der Erdsonde 20 in eine Bohrung. Der Sondenfuß 46 kann mittels eines thermischen Schweißverfahrens, beispielsweise Stumpfscheißen, mit dem Außenrohr 32 verbunden werden.

Das Außenrohr 32 weist üblicherweise eine Wandstärke wa zwischen 2,5 mm und 5 mm auf. Vorzugsweise weist es eine Wandstärke wa von 3,2 mm bis 3,8 mm auf. Der innere Durchmesser des Außenrohres 32 beträgt vorzugsweise 100 mm bis 180 mm. Der innere Durchmesser di des Innenrohres 30 liegt vorteilhaft zwischen 20 mm und 50 mm. Das Verhältnis des Durchmessers di des Innenrohres 30 zu dem Durchmesser da des Außenrohres 32 liegt also in einem Bereich zwischen 0,2 und 0,7, vorteilhaft in einem Bereich zwischen 0,25 und 0,35. Dadurch wird erreicht, dass der Ringraum 64 eine verhältnismäßig große Fläche aufweist und sich das Wärmeübertragungsfluid darin möglichst langsam bewegt. Gleichzeitig ist noch gewährleistet, dass der Durchmesser di des Innenrohres 30 nicht zu klein ist und sich hier kein zu großer Rohrwiderstand ausbildet.

Um die Erdsonde 20 entlüften zu können, weist die erfindungsgemäße Erdsonde 20 vorteilhaft eine Entlüftung 70 auf. Diese umfasst eine Entlüftungsöffnung 42, eine Entlüftungsleitung 36 und ein Entlüftungsventil 38. Die Entlüftungsöffnung 42 ist vorteilhaft an einer möglichst weit oben gelegenen Stelle des Anschlussdeckels 24 angeordnet. Die Entlüftungsleitung 36 ist an die Entlüftungsöffnung 42 angeschlossen. Am anderen Ende der Entlüftungsleitung 36 ist ein Entlüftungsventil 38 angeordnet, beispielsweise ein Kugelhahn. Zur Entlüftung der Erdsonde 20 wird das Wärmeübertragungsfluid unter Druck gesetzt und das Entlüftungsventil 38 geöffnet.

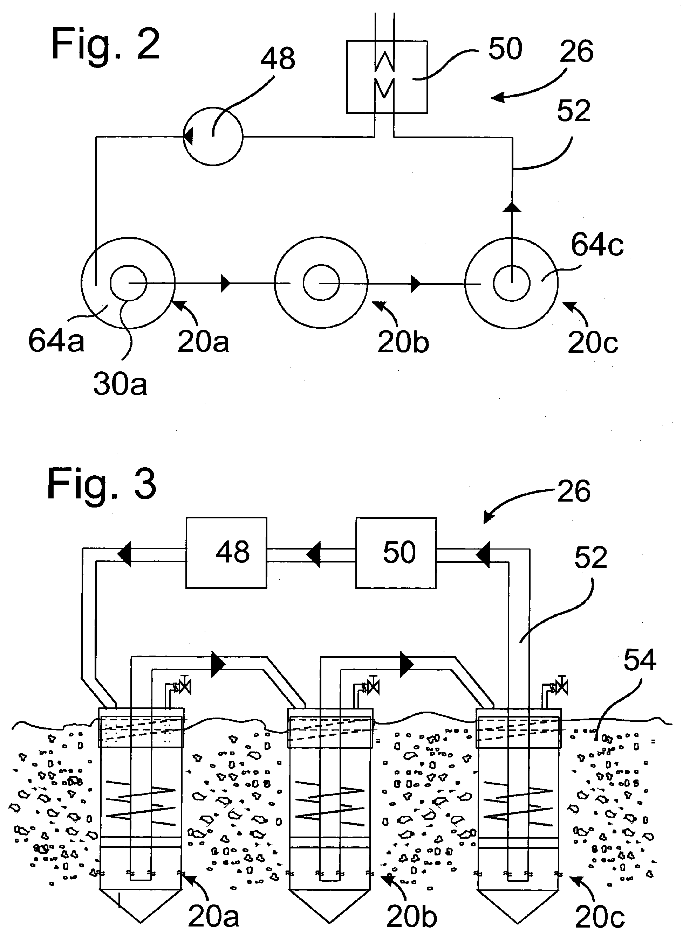

Figur 2 zeigt in der Draufsicht eine schematische Darstellung dreier Erdsonden 20a, 20b, 20c mit Leitungen 52, die zur Realisierung eines Erdsondenwärmekreislaufes 26 zusammengeschaltet sind. Dargestellt ist ein geschlossener Erdsondenwärmekreislauf 26, in dem das Wärmeübertragungsfluid zunächst mit einer Pumpe 48 auf ein höheres Druckniveau gebracht wird. Alsdann wird das Wärmeübertragungsfluid einer ersten Erdsonde 20a zugeführt. Das Wärmeübertragungsfluid wird dabei in den Ringraum 64a geleitet. Hierin strömt das Wärmeübertragungsfluid bis in den Verbindungsbereich 68, durch das Innenrohr 30a aus wieder hinauf und gelangt in die mittlere Erdsonde 20b. Danach wird das Wärmeübertragungsfluid von der mittleren Erdsonde 20b in den Ringraum 64c der dritten Erdsonde 20c geleitet. Hat das Wärmeübertragungsfluid alle drei Erdsonden 20a, 20b, 20c durchströmt, wird es einem Wärmetauscher 50 zugeführt.

Figur 3 zeigt eine Anordnung dreier Erdsonden 20a, 20b, 20c in der Reihenschaltung in einer Seitenansicht. Die Darstellung ist weniger schematisch, insbesondere sind die Leitungen 52 deutlicher als solche erkennbar.

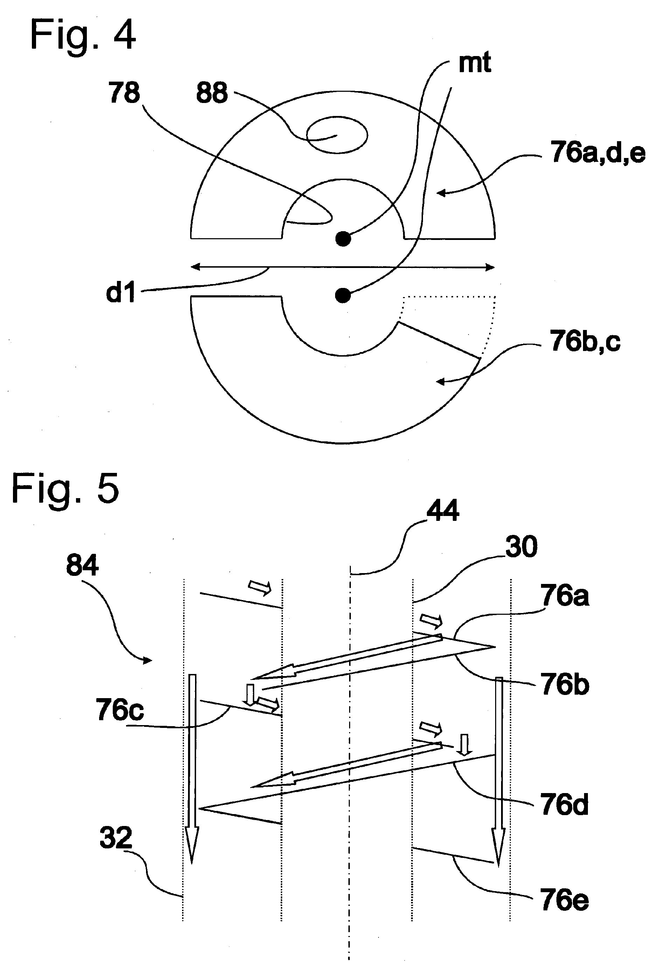

Figur 4 zeigt beispielhafte Teilringscheiben 76a-76e. Diese umschließen im eingesetzten Zustand das Innenrohr 30 mit einem Außendurchmesser d1, einem Mittelpunkt mt und einem Innenrand 78. Die Teilringscheiben 76 können in beliebiger Art und Weise mit dem Innenrohr 30 verbunden werden, beispielsweise verschweißt oder verklebt. Die Komponenten des Erdsondenfluidturbulators können entsprechend aus dem gleichen Material, vorzugsweise aus thermoplastischem Kuststoff, wie das Innenrohr 30 gefertigt sein, wodurch eine leichte Verbindung zwischen den Teilringscheiben 76 und/oder den Ringscheiben 80 mit dem Innenrohr 30 gewährleistet ist.

Der Außendurchmesser d1 der Teilringscheibe 76 ist so gewählt, dass er geringfügig kleiner als der Innendurchmesser des Außenrohrs 32 ist. Einerseits wird dadurch ein Einschieben des Innenrohrs 30 samt befestigten Teilringscheiben 76 in das Außenrohr 32 vereinfacht, andererseits wirken die Teilringscheiben 76 dadurch im Betriebszustand als Abstandshalter zwischen Außenrohr 32 und Innenrohr 30, beziehungsweise stützen die beiden gegeneinander ab.

Figur 5 zeigt eine schematische Darstellung eines Teilscheibenturbolators 84 im montierten Zustand. In der gezeigten Ausfertigung besteht dieser aus fünf Teilringscheiben 76a-76e, deren Außendurchmesser d1 kleiner als der Innendurchmesser des Außenrohrs 32 sind. Die Teilringscheiben 76a, 76d und 76e sind dabei vorzugsweise Teilringscheiben mit einem Mittelpunktwinkel von etwa 180°, bilden also in etwa halbe Ringscheiben. Die Teilringscheiben 76b und 76c sind Teilringscheiben von weniger als 180°. Eine solche wird vorzugsweise aus einer Halbringscheibe gefertigt, der endseitig ein Ringscheibensektor entnommen wird. Die Teilringscheiben 76a, 76c und 76e sind im Betriebszustand vorzugsweise so übereinander angeordnet, dass bei einer Draufsicht die Teilringscheiben 76c und 76e von der Teilringscheibe 76a verdeckt werden. Ferner liegen die Teilringscheiben 76a, 76c und 76e in Ebenen, die ähnliche Winkel bezüglich einer Orthogonalebene zur Längsachse 44 aufweisen. Teilringscheiben 76b und 76d sind in ähnlicher Weise zueinander angeordnet und liegen bezüglich der Längsachse den Teilringscheiben 76a, 76c und 76e gegenüber. Die Ebenen, in denen die Teilringscheiben 76b und 76d liegen, weisen bezüglich der Orthogonalebene einen ähnlichen Winkelwert, aber mit unterschiedlichem Vorzeichen wie die Ebenen der Teilringscheiben 76a, 76c und 76e auf. Sie sind also sozusagen in die entgegengesetzte Richtung geneigt. Vorteilhaft erweist sich dabei ein Winkelwert von etwa 5° bis 15°. Die Geometrie eines solche Teilscheibenturbolators 84 ähnelt einer Helix mit Aussparungen 88 (zwischen Teilringscheiben 76b-76c und 76c-76d). Dadurch erfährt das Wärmeübertragungsfluid beim Passieren dieses Teilscheibenturbolators 84 drei Strömungsrichtungen. Diese Strömungsrichtungen und Teilströme sind durch die Pfeile in Figur 5 angedeutet. Ein Teil des Wärmeübertragungsfluids passiert den Teilscheibenturbulator 84 in vertikaler Richtung zwischen der Außenrohrinnenfläche 60 und dem Teilscheibenturbulator 84. Ein zweiter Teil wird durch Teilringscheibe 76a des Teilscheibenturbulators 84 erfasst und erfährt dadurch eine schräge, rotatorische Richtung. Diese wird zwischen Teilringscheiben 76b-76c und 76c-76d zusätzlich in zwei Unterströmungen aufgeteilt. Ein Teil überquert die Aussparungen, die dadurch entsteht, dass sich zwei benachtbarte Teilringscheiben 76b-76c, 76c-76d nicht zu vollständigen Ringscheiben zusammensetzen lassen, sondern gemeinsam einen Mittelpunktwinkel von weniger als 360° aufweisen und hält seine rotatorische Bewegung bei. Der Rest fließt vertikal durch die Aussparungen 88 hindurch, wodurch eine zusätzliche Verwirbelung erzeugt wird.

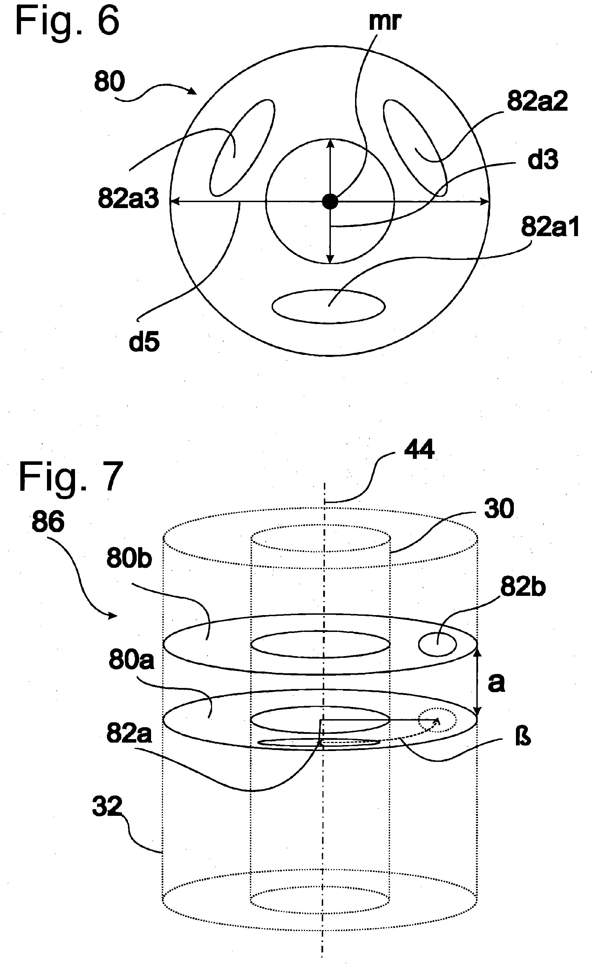

Figur 6 zeigt die schematische Darstellung einer Ringscheibe 80, mit einem Außendurchmesser d5, einem Innendurchmesser d3, einem Mittelpunkt mr und drei Öffnungen 82, wobei auch nur eine Öffnung ausreichen kann. Der Innendurchmesser d3 der Ringscheibe 80 ist dem Außendurchmesser des Innenrohrs 30 angepasst. Dadurch kann die Ringscheibe 80, ähnlich wie die oben beschriebene Teilringscheibe 76, an dem Innenrohr 30 befestigt werden. Vorzugsweise erfolgt diese Befestigung jedoch in einer Orthogonalebene der Längsachse 44. Der Außendurchmesser d5 der Ringscheibe 80 ist vorzugsweise dem Innendurchmesser da des Außenrohrs 32 angepasst. Einerseits wirkt die Ringscheibe 80 dadurch als Abstandshalter zwischen Außenrohr 32 und dem Innenrohr 30 und andererseits wird dadurch die vertikale Strömung des Wärmeübertragungsfluids, insbesondere auch in der Nähe der Außenrohrinnenfläche 60, unterbrochen. Das Wärmeübertragungsfluid strömt durch die drei Öffnung 82, wodurch ein Vermischen des Wärmeübertragungsfluid erfolgt.

Figur 7 zeigt eine schematische Darstellung einer vorteilhaften Kombination zweier um die Längsachse 44 zueinander verdrehter Ringscheiben 80a und 80b, die untereinander, mit einem Abstand a in Richtung der Längsachse 44, angeordnet sind. Eine solche Anordnung bildet ein Ringscheibenpaar 86. Durch die untereinander um Winkel ß verdrehte Lage, mit Abstand a, wird ein zusätzliches Vermischen des Wärmeübertragungsfluids erreicht.

Über einen Längenabschnitt von etwa 15m bis 25m empfiehlt sich eine Kombination von circa 10 bis 15 Teilscheibenturbulatoren 84 mit mindestens zwei Ringscheibenpaaren 86. Eine solche Kombination weist im obersten Bereich des Längenabschnitts einige Ringscheibenturbolatoren 84 auf, auf welche ein Ringscheibenpaar 86 folgt. Diese Anordnung wiederholt sich und wird im unteren Teil entweder durch einen Teilscheibenturbolator 84 oder durch ein Ringscheibenpaar 86 abgeschlossen. Ferner empfiehlt es sich, die erzeugte rotatorische Strömungsrichtung der Teilscheibenturbulatoren 84 abzuwechseln: wenn in einer Draufsicht ein erster Teilscheibenturbolator 84 eine rotatorische Bewegung des Wärmeübertragungsfluids im Uhrzeigersinn erzeugt, sollte mindestens ein zweiter Teilscheibenturbolator 84 eine rotatorische Bewegung entgegen des Uhrzeigersinns erzeugen. Teilscheibenturbolatoren 84 und/oder Ringscheibenpaare 86 können abschnittsweise oder über die gesamte Länge der Erdsonde 20 angeordnet sein.

Durch das Vermischen und Verwirbeln des Wärmeübertragungsfluids durch die Kombination von Teilscheibenturbolatoren 84 und Ringscheibenpaaren 86 findet ein optimaler und harmonischer Energieaustausch zwischen Erdreich und Wärmeübertragungsfluid statt. Daraus resultiert, dass die Wärmepumpe schon bei geringen Bohrtiefen von 15m-30m hocheffiziente Wirkungsgrade erzielen. Offensichtliche Vorteile einer geringeren Bohrtiefe sind unter anderem die geringen Anschaffungs- und Installationskosten und die Verwendbarkeit von Wärmepumpen in Bereichen mit Bohrtiefenbegrenzung.

Die vorliegende Erfindung ist selbstverständlich nicht auf das vorstehend beschriebene Ausführungsbeispiel beschränkt. So kann die Befestigung der Ringscheiben 80 und/oder der Teilringscheiben 76 alternativ oder zusätzlich auch an der Außenrohrinnenfläche 60 des Außenrohrs 32 erfolgen. Im Falle einer ausschließlichen oder teilweisen Befestigung an der Außenrohrinnenfläche 60 des Außenrohrs 32 können die Teilringscheiben 76 und/oder die Ringscheiben 80 dann vollständige oder teilweise Abstände vom Innenrohr 30 aufweisen, so dass dazwischen Wärmeübertragungsfluid in axialer Richtung strömen kann.

Anstelle eines Teilscheibenturbolators 84 kann für die Erzeugung der schräg, rotatorischen Bewegung des Wärmeübertragungsfluids eine Helix verwendet werden, die vorzugsweise Löcher aufweist. Die Löcher erzeugen dann die Aufspaltung der rotatorischen Strömung in einen rotatorischen und einen vertikalen Anteil.

Ferner können auf den Teilscheibenturbolatoren 84 Stopper angebracht sein. Diese erzeugen zusätzliche Verwirbelungen der schräg-rotatorische Strömung.

### Bezugszeichenliste

- 20.: Erdsonde
- 22.: Zulauf
- 24.: Anschlussdeckel
- 26.: Erdsondenwärmekreislauf
- 28.: Anschlusskontakt
- 30.: Innenrohr
- 32.: Außenrohr
- 34.: Heizwendeln
- 36.: Entlüftungsleitung
- 38.: Entlüftungsventil
- 40.: Ablauf
- 42.: Entlüftungsöffnung
- 44.: Längsachse
- 46.: Sondenfuß
- 48.: Pumpe
- 50.: Wärmetauscher
- 52.: Leitungen
- 54.: Erdreich
- 56.: Innenrohrinnenfläche
- 58.: Innenrohraußenfläche
- 60.: Außenrohrinnenfläche
- 62.: Außenrohraußenfläche
- 64.: Ringraum
- 66.: Innenrohrraum
- 68.: Verbindungsbereich
- 70.: Entlüftung
- 72.: unteres Ende
- 74.: unteres Ende
- 76.: Teilringscheibe
- 78.: Innenrand
- 80.: Ringscheibe
- 82.: Öffnung
- 84.: Teilscheibenturbolator
- 86.: Ringscheibenpaar
- 88.: Aussparung

## Patentansprüche

1. Erdsondenfluidturbolator für eine koaxialen Erdsonde (20), welche zum Austausch von Wärme zwischen einem Wärmeübertragungsfluid und dem die Erdsonde (1) umgebenen Erdreich, im welchem die Erdsonde (20) im Betriebszustand angeordnet ist, vorgesehen ist, wobei mindestens zwei benachbarte Teilringscheiben (76,76a,76e), die entlang der Längsachse (44) versetzt zueinander angeordnet sind und in einer Ebene liegen, die in einem Winkel zu einer Orthogonalebene einer Längsachse (17) der Erdsonde (20) angeordnet ist, jeweils aufweisen
- einen Mittelpunkt mt, der etwa auf der Längsachse (44) liegt,
- einen Innenrand (41), der zur Befestigung der Teilringscheibe (76,76a-76e) an einer Innenrohraußenfläche (58) eines Sondeninnenrohrs (30) dient,
**dadurch gekennzeichnet, dass**
die benachbarten Teilringscheiben (76,76a-76e)
- im Wesentlichen diametral gegenüberliegend zueinander angeordnet sind,
- bezüglich der Orthogonalebene Winkelwerte mit unterschiedlichen Vorzeichen aufweisen, und
- einen Außendurchmesser d1 aufweisen, der kleiner einem Innendurchmesser da eines Sondenaußenrohrs (32) der Ersonde (20) ist.

2. Erdsondenfluidturbolator nach Anspruch 2 oder 3, **dadurch gekennzeichnet, dass** zwei benachbarte Teilringscheiben (76) das Sondeninnenrohr (30) gemeinsam um weniger als 360° umschließen.

3. Erdsondenfluidturbolator nach einem der oben genannten Ansprüche, **dadurch gekennzeichnet, dass** drei benachbarte Teilringscheiben (76, 76a-76e) das Sondeninnenrohr (8) gemeinsam um mehr als 360° umschließen.

4. Erdsondenfluidturbolator nach einem der oben genannten Ansprüche, **dadurch gekennzeichnet, dass** mindestens eine Teilringscheibe (76,76a-76e) mindestens eine Aussparung aufweist.

5. Erdsondenfluidturbolator nach einem der oben genannten Ansprüche, **dadurch gekennzeichnet, dass** mindestens 3 untereinander angeordnete Teilringscheiben (76, 76a-76e) einen Teilscheibenturbolator (84) bilden.

6. Erdsondenfluidturbolator nach Anspruch 5, **dadurch gekennzeichnet, dass** mindestens 2 Teitscheibenturbotatoren (84) verwendet werden, deren oberste Teilringscheiben (76a) in Ebenen liegen, die bezüglich der Ortogonalebene in etwa gleiche Winkelwerte mit unterschiedlichen Vorzeichen aufweisen.

7. Erdsondenfluidturbolator nach einem der oben genannten Ansprüche, **dadurch gekennzeichnet, dass** auf einer Fläche mindestens einer Teilringscheibe (76, 76a-76e) mindestens ein Stopper angebracht ist.

8. Erdsondenfluidturbolator nach einem der oben genannten Ansprüche, **dadurch gekennzeichnet, dass** der Erdsondenfluidturbolator zusätzlich mindestens eine Ringscheibe (80) beinhaltet, aufweisend
- eine Ringscheibenfläche, die sich vorzugsweise parallel zur Orthogonalebene erstreckt
- mindestens eine Öffnung (82) in der Ringscheibenfläche
- einen Mittelpunkt mr, der etwa auf der Längsachse (44) liegt
- einen Innendurchmesser d3, der gleich einem Außendurchmesser d₄ des Sondeninnenrohrs (30) ist
- einen Außendurchmesser d5, der kleiner gleich dem Innendurchmesser da des Sondenaußenrohrs (32) ist.

9. Erdsondenfluidturbolator nach Anspruch 8, **dadurch gekennzeichnet, dass** der Außendurchmesser d5 der Ringscheibe gleich dem Innendurchmesser da des Sondenaußenrohrs (32) ist.

10. Erdsondenfluidturbolator nach Anspruch 8 oder 9, **dadurch gekennzeichnet, dass** zwei Ringscheiben (80), die einen Abstand a entlang der Längsachse (44) aufweisen und deren Öffnungen (82) um einen Ringscheibenwinkel ß um die Längsachse (44) verdreht zueinander angeordnet sind, ein Ringscheibenpaar (86) bilden.

11. Erdsondenfluidturbolator nach Anspruch 10, **dadurch gekennzeichnet, dass** eine Erdsonde (1) auf Längenabschnitten von etwa 20m bis etwa 25m mindestens 10 Teilscheibenturbolatoren (84) und mindestens 2 Ringscheibenpaare (86) aufweist, so angeordnet, dass oberhalb, zwischen und unterhalb der Ringscheibenpaare (86) Teilscheibenturbolatoren (84) vorgesehen sind.

## Claims

1. A borehole heat exchanger fluid turbolator for a coaxial borehole heat exchanger (20) provided for exchanging heat between a heat transfer fluid and the ground soil surrounding the borehole heat exchanger (1) in which the borehole heat exchanger (20) is disposed in the operating state, wherein at least two adjacent partial annular discs (76, 76a - 76e), which are disposed offset relative to one another along the longitudinal axis (44) and lie in the same plane, which is disposed at an angle to an orthogonal plane of a longitudinal axis (17) of the borehole heat exchanger (20), each comprise
- a center point mt, which is located approximately on the longitudinal axis (44),
- an inner edge (41) that serves for attaching the partial annular disc (76, 76a - 76e) to an inner pipe outer surface (58) of an inner pipe (30) of the borehole heat exchanger,
**characterized in that**
the adjacent partial annular discs (76, 76a - 76e)
- are disposed substantially diametrically opposite to each other,
- have angle values with different signs with respect to the orthogonal plane, and
- have an outer diameter d1 that is smaller than an inner diameter dₐ of the outer pipe (32) of the borehole heat exchanger (20).

2. The fluid turbolator for a borehole heat exchanger according to claim 2 or 3, **characterized in that** two adjacent partial annular discs (76) together enclose the inner pipe (30) of the borehole heat exchanger over less than 360°.

3. The fluid turbolator for a borehole heat exchanger according to any one of the above-mentioned claims, **characterized in that** three adjacent partial annular discs (76, 76a - 76e) together enclose the inner pipe (8) of the borehole heat exchanger over more than 360°.

4. The fluid turbolator for a borehole heat exchanger according to any one of the above-mentioned claims, **characterized in that** at least one partial annular disc (76, 76a - 76e) has at least one cutout.

5. The fluid turbolator for a borehole heat exchanger according to any one of the above-mentioned claims, **characterized in that** at least 3 partial annular discs (76, 76a - 76e) disposed one below the other form a partial disc turbolator (84).

6. The fluid turbolator for a borehole heat exchanger according to claim 5, **characterized in that** at least 2 partial disc turbolators (84) are used, whose uppermost partial annular discs (76a) lie in planes that have approximately the same angle values with different signs with respect to the orthogonal plane.

7. The fluid turbolator for a borehole heat exchanger according to any one of the above-mentioned claims, **characterized in that** at least one stopper is attached to a surface of at least one partial annular disc (76, 76a - 76e).

8. The fluid turbolator for a borehole heat exchanger according to any one of the above-mentioned claims, **characterized in that** the fluid turbolator for a borehole heat exchanger additionally includes at least one annular disc (80), comprising
- an annular-disc surface that preferably extends parallel to the orthogonal plane,
- at least one opening (82) in the annular-disc surface,
- a center point mr, which is located approximately on the longitudinal axis (44),
- an inner diameter d3, which is equal to an outer diameter d₄ of the inner pipe (30) of the borehole heat exchanger,
- an outer diameter d5 that is smaller than or equal to the inner diameter da of the outer pipe (32) of the borehole heat exchanger.

9. The fluid turbolator for borehole heat exchanger according to claim 8, **characterized in that** the outer diameter d5 of the annular disc is equal to the inner diameter da of the outer pipe (32) of the borehole heat exchanger.

10. The fluid turbolator for a borehole heat exchanger according to claim 8 or 9, **characterized in that** two annular discs (80), which have a distance a from each other along the longitudinal axis (44) and whose openings (82) are disposed in a manner rotated relative to each other by an annular-disc angle β about the longitudinal axis (44), form an annular-disc pair (86).

11. The fluid turbolator for a borehole heat exchanger according to claim 10, **characterized in that** a borehole heat exchanger (1) comprises at least 10 partial disc turbolators (84) and at least 2 annular-disc pairs (86) over lengths of approximately 20 m to approximately 25 m, disposed in such a way that partial disc turbolators (84) are provided above, between and below the annular-disc pairs (86).

## Revendications

1. Turbulateur de fluide de sonde géothermique pour une sonde géothermique coaxiale (20) qui est prévue pour échanger de la chaleur entre un fluide de transfert thermique et la terre qui entoure la sonde géothermique (20) et dans laquelle la sonde géothermique (20) est disposée en état de fonctionnement, dans lequel au moins deux disques annulaires partiels (76, 76a-76e) voisins qui sont disposés de manière décalée les uns par rapport aux autres le long de l'axe longitudinal (44) et qui sont situés dans un plan lequel est disposé à un angle par rapport à un plan orthogonal d'un axe longitudinal (17) de la sonde géothermique (20), présentent chacun
- un point central mt qui est situé à peu près sur ledit axe longitudinal (44),
- un bord intérieur (41) qui sert de fixation du disque annulaire partiel (76, 76a-76e) sur une surface extérieure de tuyau intérieur (58) d'un tuyau intérieur de sonde (30),
**caractérisé par le fait que**
les disques annulaires partiels (76, 76a-76e) voisins
- sont disposés de manière à être pour l'essentiel diamétralement opposés les uns par rapport aux autres,
- présentent, par rapport au plan orthogonal, des valeurs d'angle ayant des signes différents, et
- présentent un diamètre extérieur d1 qui est inférieur à un diamètre intérieur dₐ d'un tuyau extérieur de sonde (32) de la sonde géothermique (20).

2. Turbulateur de fluide de sonde géothermique selon la revendication 1, **caractérisé par le fait que** deux disques annulaires partiels (76) voisins entourent ensemble de moins de 360° le tuyau intérieur de sonde (30).

3. Turbulateur de fluide de sonde géothermique selon l'une quelconque des revendications susmentionnées, **caractérisé par le fait que** trois disques annulaires partiels (76, 76a-76e) voisins entourent ensemble de plus de 360° le tuyau intérieur de sonde (30).

4. Turbulateur de fluide de sonde géothermique selon l'une quelconque des revendications susmentionnées, **caractérisé par le fait qu'**au moins un disque annulaire partie! (76, 76a-76e) présente au moins un évidement.

5. Turbulateur de fluide de sonde géothermique selon l'une quelconque des revendications susmentionnées, **caractérisé par le fait qu'**au moins 3 disques annulaires partiels (76, 76a-76e) disposés les uns au-dessous des autres forment un turbulateur à disques partiels (84).

6. Turbulateur de fluide de sonde géothermique selon la revendication 5, **caractérisé par le fait que** l'on utilise au moins 2 turbulateurs à disques partiels (84) dont les disques annulaires partiels les plus hauts (76a) sont situés dans des plans qui présentent, par rapport au plan orthogonal, des valeurs d'angle à peu près égales ayant des signes différents.

7. Turbulateur de fluide de sonde géothermique selon l'une quelconque des revendications susmentionnées, **caractérisé par le fait que** sur une surface d'au moins un disque annulaire partiel (76, 76a-76e) est montée au moins une butée.

8. Turbulateur de fluide de sonde géothermique selon l'une quelconque des revendications susmentionnées, **caractérisé par le fait que** ledit turbulateur de fluide de sonde géothermique comprend en sus au moins un disque annulaire (80) présentant
- une surface de disque annulaire qui s'étend de préférence parallèlement au plan orthogonal,
- au moins une ouverture (82) dans ladite surface de disque annulaire,
- un point central mr qui est situé à peu près sur l'axe longitudinal (44),
- un diamètre intérieur d3 qui est égal à un diamètre extérieur d₄ du tuyau intérieur de sonde (30),
- un diamètre extérieur d5 qui est inférieur/égal au diamètre intérieur da du tuyau extérieur de sonde (32).

9. Turbulateur de fluide de sonde géothermique selon la revendication 8, **caractérisé par le fait que** le diamètre extérieur d5 du disque annulaire est égal au diamètre intérieur da du tuyau extérieur de sonde (32).

10. Turbulateur de fluide de sonde géothermique selon la revendication 8 ou 9, **caractérisé par le fait que** deux disques annulaires (80) qui présentent une distance a le long de l'axe longitudinal (44) et dont les ouvertures (82) sont disposées de manière à être tournées l'une par rapport à l'autre d'un angle de disque annulaire β autour de l'axe longitudinal (44) forment une paire de disques annulaires (86).

11. Turbulateur de fluide de sonde géothermique selon la revendication 10, **caractérisé par le fait qu'**une sonde géothermique (20) présente, sur des portions de longueur d'environ 20 m à environ 25 m, au moins 10 turbulateurs à disques partiels (84) et au moins 2 paires de disques annulaires (86), disposés de telle sorte que des turbulateurs à disques partiels (84) sont prévus au-dessus, entre et au-dessous des paires de disques annulaires (86).
